## Europäisches Patentamt
## European Patent Office
## Office européen des brevets

(19)

(11) Publication number: **0 186 358**
**A2**

(12) # EUROPEAN PATENT APPLICATION

(21) Application number: **85308911.8**

(22) Date of filing: **06.12.85**

(51) Int. Cl.⁴: **G 01 N 3/16**
**G 01 N 3/02**

(30) Priority: **10.12.84 US 679843**

(43) Date of publication of application:
**02.07.86 Bulletin 86/27**

(84) Designated Contracting States:
**BE CH DE FR GB LI NL**

(71) Applicant: **ILLINOIS TOOL WORKS INC.**
**8501 West Higgins Road**
**Chicago Illinois 60631(US)**

(72) Inventor: **Peterson, Francis C.**
**89 Plumbrook Road**
**Woodbury Connecticut 06798(US)**

(74) Representative: **Rackham, Stephen Neil et al,**
**GILL JENNINGS & EVERY 53-64 Chancery Lane**
**London WC2A 1HN(GB)**

(54) **Apparatus for measuring pull-out resistance.**

(57) A testing apparatus (810) for measuring the pull-out resistance of fasteners includes a disc (16) rotatably supported by a base (12). The disc (16) has a bearing surface (35) of uniform radius. A flexible strap (22) is fixed to the disc (16) so that the strap (22) engages the bearing surface (35) as the disc (16) rotates. The other end of the strap (22) includes means (49) to engage beneath the head of a fastener (24) to be tested. A torque wrench (29) is used to rotate the disc (16) and apply a pull-out load to the fastener (24). The length of the uniform radius (835) and the flexible nature of the strap (22) create a constant moment arm, making the torque measured by the wrench (20) directly convertible to pull-out load applied to the fastener (24).

*Fig. I*

## Apparatus For Measuring Pull-Out Resistance

The present invention relates to an apparatus for measuring the pull-out resistance of articles embedded in a workpiece. More particularly, the invention relates to a device for making field measurements of fasteners used in the roofing industry.

In roofing, particularly in roof repair, a problem frequently encountered is a wide variation in the strength of the material to which the roof is applied. Varying conditions of disrepair can create widely varying conditions in the field. To avoid unnecessarily frequent placement of roof fixing anchors or fasteners, it is necessary to get large quantities of test data to evaluate the material into which the anchors or fasteners are to be placed. The presence or lack of moisture in roofing material such as gypsum or light weight concrete, can create particularly wide variations in pull-out strength.

Practices in the past have included a rough estimate of pull-out strength by hand removal of sample fasteners. Alternatively, an overly conservative anchor or fastener placement has been used.

According to this invention an apparatus for testing pull-out strength of fasteners comprises a base, a pulling member rotatably mounted on the base for rotation about an axis and having bearing surface, which is located at a constant distance from the axis, flexible pulling means fixed to the member for pulling a fastener along a line tangential to the bearing surface, and a lever arm extending from the pulling member and including torque measuring means for measuring the torque exerted about the axis.

The present invention provides a portable testing apparatus for testing fasteners in the field which can be used to quickly test fasteners to gather large amounts of test data. It provides a simple, low cost, and durable testing apparatus which can be used by field engineers to determine the placement array of fasteners in a roofing construction.

A particular example of the present invention comprises a generally flat, at least partially cylindrical disc which is rotatably mounted on a support. The support is comprised of a pair of L-shaped plates which support an axle about which the disc rotates. A flexible spring steel strap is mounted on the disc and extends down to the bottom of the plates. The end of the strap contains a fastener holding block which is adapted to receive the head of a test fastener. Extending rigidly from the disc is a lever arm, which preferably includes a torque wrench which measures torque about the centre of the disc. The torque wrench measures torque in inch-pounds, and the radius of the disc is approximately one inch. The torque reading, therefore, is directly convertible to pull-out load associated with the test fastener. Because the spring steel strap is flexible, the line of pull-out is tangential tb the disc, which makes the torque reading an accurate measure of pull-out resistance of the test fastener.

A particular example of an apparatus in accordance with this invention will now be described with reference to the accompanying drawings, in which:-

Figure 1 is a perspective view;

Figure 2 is a partial side elevation in partial section; and,

Figure 3 is a partial front elevation in partial section.

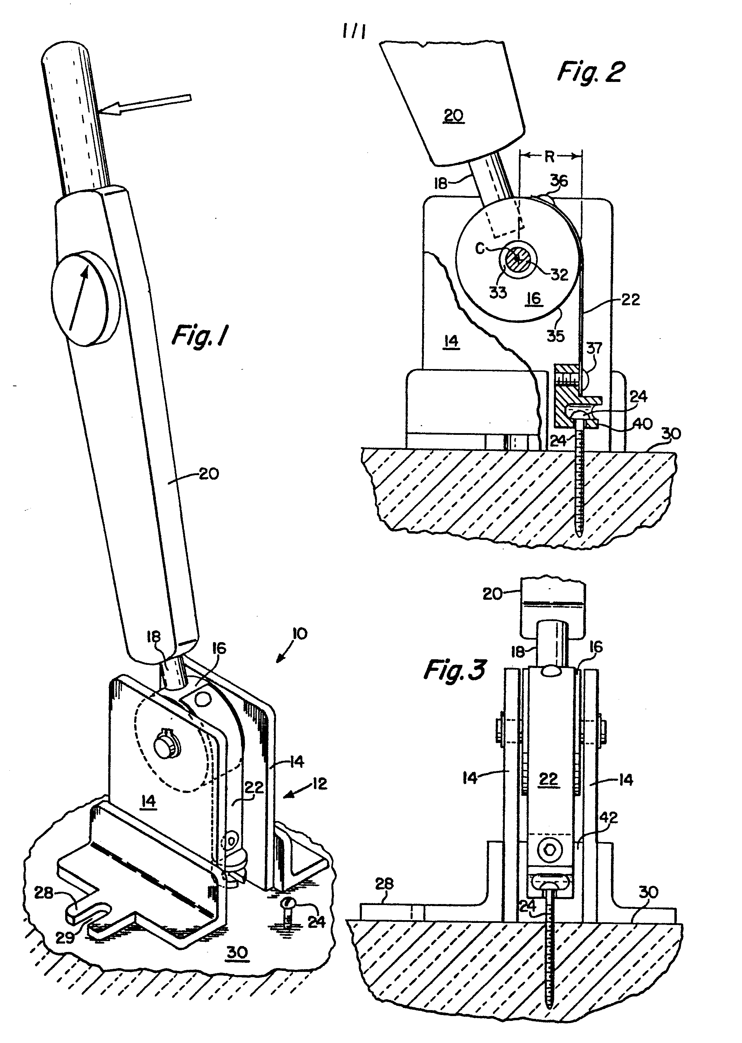

Figure 1 shows the apparatus 10 comprised of a base 12 which is made up of two plates 14 which support a pulling member or disc 16. Extending from the disc is a lever arm 18 which includes a torque wrench 20. Also attached to the disc and extending in a downward direction is a flexible tension strap 22. The disc 16 is a generally flat cylindrical member with a bearing surface 35 on the periphery of the disc 16. The bearing surface 35 abuts the strap 22 during a test.

The apparatus in Figure 1 is shown in its position just prior to its engagement with a test fastener 24. The fastener holding block 26 attached to the free end of the strap 22 is adapted to engage the head of the test fastener 24.

It should also be noted that the spacing foot 28 is used to place the head of the fastener a predetermined distance above the workpiece surface 30. The spacing foot 28 includes an open slot 29 which allows the apparatus to be moved laterally out of engagement with the fastener head when the fastener has been installed to a predetermined level.

Figure 2 shows the apparatus 10 in engagement with the test fastener 24. In this view, it can be seen that the axle 32 supports the bearing 33 around which the disc 16 rotates. The outer periphery of the disc 16 includes a bearing surface 35. The strap 22 is fastened to the disc 16 by a screw 36. The bearing surface 35 is disposed at a constant radius from the axle 32. The flexible strap 22 is adapted to ride on the bearing surface 35 in order to pull the fastener 24 along a line tangent to the bearing surface 35. The radius "R", which corresponds to the distance of the bearing surface 35 from the centre of the disc "C", is preferably one inch, (25.4 mm). By making this distance "R" one inch (25.4 mm) and by using a torque wrench 20 which measures in inch-pounds, it is possible to make direct conversions from inch-pounds to pounds. A similar arrangement can be provided to give an output in Newtons or Kilograms, but preferably the apparatus is similar to that described above and simply has the dial of the torque wrench 20 calibrated to provide a result in Newtons or Kilograms.

As shown in Figures 2 and 3 the holding block 26 is attached to the free end of the strap 22 by a screw 37. The block 26 is comprised of a pair of intersecting slots 39 and 40. The lateral slot 39 extends into the block deep enough to accommodate the full fastener head. The vertical slot 40 extends through the bottom of the block 26. It should be noted that the axis of the fastener should be aligned with th centre of the strap 22 in order to avoid eccentricity during the pull-out of the test fastener 24. The slot 24 is deep enough in the horizontal direction to allow such alignment.

A spacing block 42 is used to hold the plates apart. The spacing block 42 is slightly wider than the disc 16 so that the disc 16 freely rotates between the plates 14.

The operation of the apparatus 10 is as follows. A test fastener 24 is placed in the slot 29 in the spacing foot 28 and is driven into the workpiece surface 30. Once the fastener 24 has been installed the holding block 26 which is attached to the free end of the flexible strap 22 is moved into engagement with the fastener head. The axis of the fastener 24 is aligned with the centre of the flexible strap when the strap 22 is in a vertical position. As downward force is applied to the torque wrench 20 and the lever arm 18 the disc 16 rotates about its centre "C". As the disc 16 rotates, the strap 22 moves upward along the line tangent to the outer periphery of the disc 16 at the bearing surface 35. As continued downward movement of the torque wrench occurs the test fastener 24 is extracted from the workpiece. By choosing the appropriate radial dimension "R" and an appropriately calibrated torque wrench 20, a simple conversion can be used to determine the maximum pull-out offered by the fastener 24.

CLAIMS

1.    An apparatus for testing pull-out strength of fasteners comprising a base (2), a pulling member (16) rotatably mounted on the base (12) for rotation about an axis (c) and having bearing surface (35), which is located at a constant distance from the axis (c), flexible pulling means (22, 40) fixed to the member (16) for pulling a fastener (24) along a line tangential to the bearing surface (35), and a lever arm (18) extending from the pulling member (16) and including torque measuring means (20) for measuring the torque exerted about the axis (c).

2.    An apparatus according to claim 1, wherein the pulling member (16) is at least partly cylindrical, and the flexible pulling means comprises a thin strap of spring steel (22) with fastener holding means (40) located at the end of the strap (22) remote from the pulling member (16).

3.    An apparatus according to claim 2, wherein the fastener holding means is a block (40) having a pair of intersecting slots, a first slot in one end of the block (40) for accommodating the shank of a screw (24), and a second slot generally perpendicular to and intersecting the first slot for receiving the head of the fastener (24).

4.    An apparatus according to any one of the preceding claims, wherein the base (12) includes a pair of plates (14) separated by a spacer (42), and the pulling member (16) is a generally flat cylindrical disc located between the plates (14) and rotatably mounted about its centre by an axle (32) connected to the plates (14).

5.    An apparatus according to any one of the preceding claims, wherein the base (12) includes a laterally extending slot (29) adjacent its extreme lower portions which provides means for spacing heads of fasteners (24) away from a workpiece surface from which pull-out strengths of the fasteners are tested to enable them to be engaged by the pulling means (40).

6. An apparatus according to any one of the preceding claims, wherein the torque measuring means (20) is a torque wrench capable of measuring torque in inch-pounds, and the pulling member (16) is generally cylindrical and has a radius substantially equal to one inch (25.4 mm); whereby torque measured by the torque wrench is directly convertible to pounds of pull-out resistance.

7. An apparatus according to any one of claims 1 to 5, wherein the torque measuring means (20) is a torque wrench capable of measuring torque in Newton metres, and it is calibrated in accordance with the radius of the bearing surface (35) of the pulling member (16) so that the reading on the torque wrench (20) provides an indication of the pull out resistance in Newtons or Kilograms.

8. An apparatus for testing pull-out strength of fasteners comprising: a base, a pulling member rotatable about an axis, an arm extending from said member, said arm including torque measuring means for measuring torque about said axis, a flexible extension of said pulling member, one end of said extension fixed to said pulling member, fastener holding means disposed at an opposite end of said extension for engaging a fastener to be tested.

9. An apparatus for testing pull-out strength of fasteners comprising a base including a pair of spaced apart plates, a pulling disc disposed between said plates, said disc having at least a portion thereof with a constant radius measured from its axis, an arm extending from said disc, said arm including torque measuring means for measuring torque about said axis, flexible elongated pulling means for pulling a screw along a line tangent to said disc.

10. An apparatus for testing pull-out strength of fasteners comprising: a generally flat cylindrical disc rotatably mounted on a support, an arm rigidly extending from said disc, said disc having a central axis and a bearing surface disposed at a constant distance from said axis, a flexible tension member attached at one end to said disc, an opposite end of said tension member having connecting means for attaching said tension member to a test fastener, torque measuring means for measuring torque about said axis, said bearing surface being positioned such that said tension member is held a predetermined constant perpendicular distance from said axis, whereby said torque is directly convertible into pull-out load.

*Fig. 2*

*Fig. 1*

*Fig. 3*